# EUROPÄISCHE PATENTSCHRIFT

(11) **EP 1 136 127 B1**
(45) Veröffentlichungstag und Bekanntmachung des Hinweises auf die Patenterteilung: **23.11.2005**
(21) Anmeldenummer: 01105203.2
(22) Anmeldetag: 03.03.2001
(51) Int. Cl.: B01L 3/02

(54) **Mehrkanal-Pipettiereinrichtung sowie Pipettenschaft dafür**
Multichannel pipetting device and related pipette shaft
Dispositif de pipetage à canaux multiples et tige de pipette associée

(30) Priorität: 20.03.2000 DE 10013511
(43) Veröffentlichungstag der Anmeldung: 26.09.2001
(73) Patentinhaber: BRAND GMBH + CO KG, 97877 Wertheim (DE)
(72) Erfinder: Wanner, Jürgen, 97877 Wertheim (DE)
(74) Vertreter: Gesthuysen, von Rohr & Eggert

(56) Entgegenhaltungen:
- EP-A- 0 348 612
- US-A- 3 732 735
- US-A- 3 855 868
- US-A- 5 364 596

## Beschreibung

Gegenstand der Erfindung ist eine Mehrkanal-Pipettiereinrichtung mit den Merkmalen des Oberbegriffs von Anspruch 1 sowie ein auswechselbarer Pipettenschaft für eine Pipettiereinrichtung mit den Merkmalen des Oberbegriffs von Anspruch 13.

Die bekannte Mehrkanal-Pipettiereinrichtung, von der die Erfindung ausgeht (US 3,855,868 A) eignet sich für geringe Rasterabstände der einzelnen, nebeneinander stehenden Pipettenspitzen, insbesondere für den geringen Rasterabstand, der für sogenannte Mikrotiterplatten erforderlich ist. Um diesen geringen Rasterabstand realisieren zu können, sind bei dieser Mehrkanal-Pipettiereinrichtung die Pipettenschäfte in im Schaftträger eingelassenen Schaftaufnahmen herausnehmbar eingesetzt. Konkret sind die Pipettenschäfte an den oberen Enden mit Außengewinden versehen, die in Innengewinde in den Schaftaufnahmen einschraubbar sind.

Die Mehrkanal-Pipettiereinrichtung des Standes der Technik ist als Luftpolster-Pipettiereinrichtung ausgeführt, auf die Aufsteckabschnitte der Pipettenschäfte werden also die die Flüssigkeit aufnehmenden Pipettenspitzen aufgesteckt. Die Aufsteckabschnitte sind an der Oberfläche so glatt ausgebildet, daß die Pipettenspitzen direkt abdichtend aufgesteckt werden können. Das ergibt allerdings bestimmte Anforderungen für die Pipettenspitzen.

Als Luftpolster-Pipettiereinrichtung benötigt die zuvor erläuterte Mehrkanal-Pipettiereinrichtung natürlich eine umlaufende Kolbendichtung für jeden Pipettenkolben. Diese ist hier jeweils am oberen, dem Kolbenträger zugewandten Ende der Kolbenaufnahme im Schaftträger angeordnet und als umlaufende Dichtung aus Elastomermaterial, nämlich als O-Ring, ausgeführt. Das beim Pipettieren relevante Luftpolster wird also einerseits vom Zylinder im Pipettenschaft, darüber hinaus aber auch vom Volumen der Kolbenaufnahme zwischen Pipettenschaft und Kolbendichtung gebildet. Der Pipettenschaft muß also in die Schaftaufnahme im Schaftträger gleichzeitig abdichtend eingeschraubt sein. Das erfordert besondere Materialien oder eine zusätzliche Dichtung an dieser Stelle.

Wird auch nur ein Kanal der zuvor erläuterten, bekannten Mehrkanal-Pipettiereinrichtung undicht, so muß man die gesamte Pipettiereinrichtung auseinanderbauen, weil man an die Kolbendichtung im Schaftträger herankommen muß. Normalerweise weiß man nämlich nicht, ob die Undichtigkeit von der Kolbendichtung, von der Dichtung zwischen Pipettenschaft und Schaftaufnahme oder von der Dichtung zwischen der aufzusteckenden Pipettenspitze und dem Aufsteckabschnitt des Pipettenschaftes herrührt. Das ist wartungstechnisch aufwendig und kostenträchtig.

Bekannt ist es bei Einkanal-Pipettiereinrichtungen seit Jahrzehnten (US 3,732,735 A, DD 283 779 A), einen Pipettenschaft am Schaftträger mittels einer Überwurfmutter zu befestigen. Der dann vorhandene Hinterschnitt am Pipettenschaft wird genutzt, um am oberen Ende des Pipettenschafts eine umlaufende Dichtungsaufnahme vorzusehen, in der die Kolbendichtung angeordnet ist. Die Kolbendichtung wird in dieser Dichtungsaufnahme durch ein Fixierungselement fixiert, das mit einem Außengewinde versehen in das Innengewinde der Überwurfmutter eingeschraubt ist. Diese Konstruktion ist vergleichsweise aufwendig und nimmt wegen der Überwurfmutter in radialer Richtung so viel Platz ein, daß sie für die geforderten Rastermaße insbesondere für Mikrotiterplatten kaum als geeignet angesehen werden kann.

Der Lehre liegt somit das Problem zugrunde, die bekannte, eingangs erläuterte Mehrkanal-Pipettiereinrichtung, die auch für geringe Rastermaße bestimmt und geeignet ist, hinsichtlich der Wartungsfreundlichkeit zu verbessern.

Die zuvor aufgezeigte Aufgabe ist bei einer Mehrkanal-Pipettiereinrichtung mit den Merkmalen des Oberbegriffs von Anspruch 1 durch die Merkmale des kennzeichnenden Teils von Anspruch 1 gelöst. Erfindungsgemäß ist erkannt worden, daß es für die Wartungsfreundlichkeit einer Mehrkanal-Pipettiereinrichtung der in Rede stehenden Art zweckmäßig ist, wenn man alle Dichtungen an den Pipettenschaft verlegt. Wird nämlich die Kolbendichtung für den Pipettenkolben auch am Pipettenschaft angeordnet, so kann eine zusätzliche Dichtung zwischen Pipettenschaft und Schaftträger entfallen, weil das Luftpolster komplett im Pipettenschaft vorliegt. Damit kommt man bei einer Undichtigkeit zu der einfachen Maßnahme, daß nur der Pipettenschaft ausgebaut und ausgewechselt werden muß, ohne daß man darauf achten müßte, welche der beiden Dichtungen - Kolbendichtung oder Dichtung zur aufsteckbaren Pipettenspitze - ursächlich für Undichtigkeiten ist. Man muß also an der Pipettiereinrichtung insgesamt nichts auseinanderbauen oder auswechseln, lediglich durch Auswechseln des Pipettenschaftes kommt man zur Fehlerbeseitigung.

Erfindungsgemäß ist weiter erkannt worden, daß das zuvor erläuterte Konzept auch bei einer Mehrkanal-Pipettiereinrichtung mit im Schaftträger eingelassenen Schaftaufnahmen realisierbar ist. Tatsächlich ist nämlich die Wandstärke der im Stand der Technik realisierten Pipettenschäfte unnötig groß wenn man heutige moderne Werkstoffe, insbesondere Kunststoffe, berücksichtigt. Man kann durchaus unter Beibehaltung des vorgegebenen, insbesondere für Mikrotiterplatten vorgegebenen Rastermaßes die Wandstärke am oberen Ende des Pipettenschaftes so verringern bzw. den Pipettenschaft so formen, daß dort für die umlaufende Dichtungsaufnahme für die Kolbendichtung radial Platz ist.

Bevorzugte Ausgestaltungen und Weiterbildungen der Lehre sind Gegenstand der Unteransprüche.

Im folgenden wird die Erfindung anhand einer lediglich ein Ausführungsbeispiel darstellenden Zeichnung näher erläutert. In der Zeichnung zeigt
- Fig. 1: in perspektivischer Ansicht ein Beispiel einer Mehrkanal-Pipettiereinrichtung der in Rede stehenden Art,
- Fig. 2: ausschnittweise, überwiegend im Schnitt, eine Mehrkanal-Pipettiereinrichtung gemäß der Erfindung mit zwei nebeneinander angeordneten Pipettenkolben etc., und zwar Fig. 2a gebrauchsfertig montiert, Fig. 2b mit den Pipettenschäften halb herausgeschraubt und Fig. 2c mit den Pipettenschäften ganz herausgeschraubt.

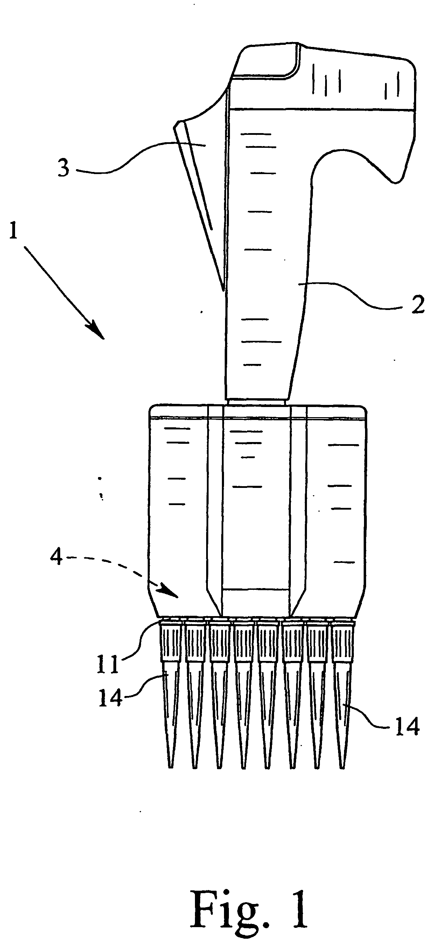

Fig. 1 zeigt zunächst allgemein eine Mehrkanal-Pipettiereinrichtung wie sie von der Anmelderin als "Transferpette" vertrieben wird. Mit einer solchen Mehrkanal-Pipettiereinrichtung kann man gleichzeitig aus einer Mehrzahl von Reaktionsgefäßen, die beispielsweise in einer Mikrotiterplatte rasterartig angeordnet sind, ein und dieselbe Flüssigkeitsmenge aufnehmen und an eine andere Stelle überführen oder von einer anderen Stelle in diese Reaktionsgefäße einbringen. Diese Praxis ist aus dem Stand der Technik bekannt und wird in der den Ausgangspunkt bildenden Literaturstelle hinreichend erläutert, so daß darauf verwiesen werden darf.

Die in Fig. 1 allgemein dargestellte Mehrkanal-Pipettiereinrichtung weist zunächst ein Gehäuse 1 mit einem der Handhabung dienenden Handgriffabschnitt 2 auf, an dem sich eine Betätigungstaste 3 zum Pipettieren befindet. Man erkennt angedeutet am Gehäuse 1 einen Schaftträger 4, an dem unten mehrere Pipettenschäfte 11 zu erkennen sind, die wiederum jeweils eine Pipettenspitze 14 auswechselbar tragen.

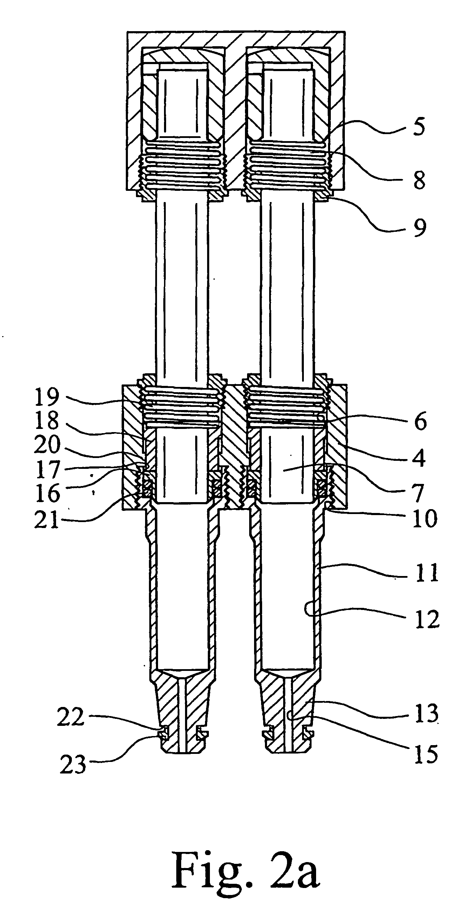

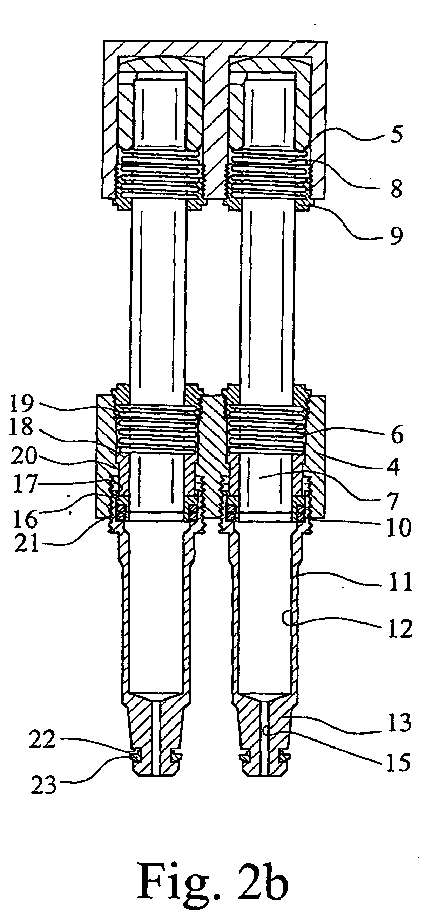

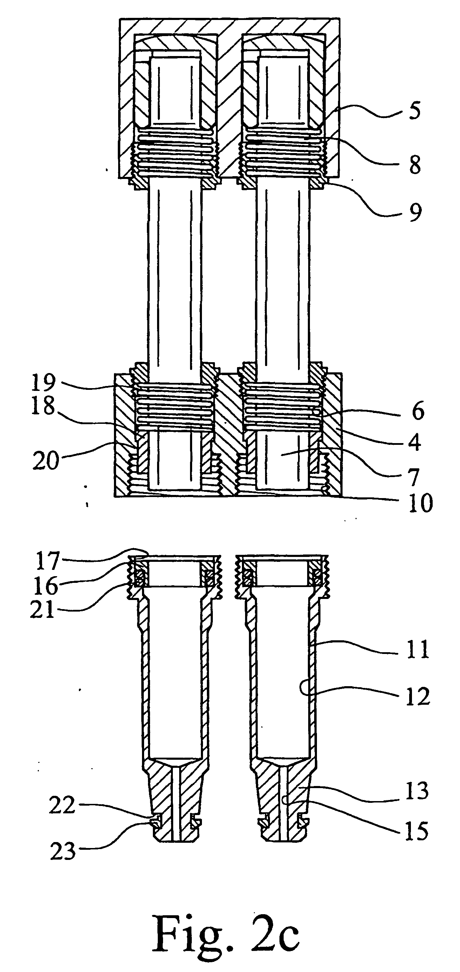

Fig. 2 zeigt das "Innenleben" einer erfindungsgemäßen Mehrkanal-Pipettiereinrichtung. In dem Gehäuse 1 befindet sich ein quer angeordneter Schaftträger 4 und darüber ein ebenfalls quer angeordneter, gegenüber dem Schaftträger 4 beweglicher Kolbenträger 5. Die Vertikalbewegung des Kolbenträgers 5 gegenüber dem Schaftträger 4 wird durch die in Verbindung mit Fig. 1 angesprochene Betätigungstaste 3 ausgelöst.

Im Schaftträger 4 befinden sich mehrere Kolbenaufnahmen 6, in die jeweils ein am Kolbenträger 5 gelagerter Pipettenkolben 7 eintritt. Jeder Pipettenkolben 7 ist im dargestellten Ausführungsbeispiel am Kolbenträger 5 mittels eines Federelementes 8 und einer Einschraubfassung 9 federnd gelagert, was im einzelnen hier nicht weiter erläutert zu werden braucht.

Der Anzahl der Kolbenaufnahmen 6 im Schaftträger 4 entspricht die Anzahl von im Schaftträger 4 auf der vom Kolbenträger 5 abgewandten Seite eingelassenen, die Kolbenaufnahmen 6 fortsetzenden Schaftaufnahmen 10. In jede der Schaftaufnahmen 10 ist in Fig. 2a ein Pipettenschaft 11 herausnehmbar eingesetzt.

Jeder Pipettenschaft 11 weist einen dem Pipettenkolben 7 angepaßten Zylinder 12, in dem der Pipettenkolben 7 läuft, und am unteren Ende einen Aufsteckabschnitt 13 für eine aufzusteckende Pipettenspitze 14, dargestellt in aufgesteckter Form in Fig. 1, auf, wobei sich im Aufsteckabschnitt 13 jeweils ein Ausstoßkanal 15 für die das Luftpolster bildende Luft bzw. ein entsprechendes Gas befindet.

Um mittels des Luftpolsters durch Bewegen des jeweiligen Pipettenkolbens 7 exakt pipettieren zu können, muß der Pipettenkolben 7 gegenüber dem Zylinder 12 abgedichtet sein. Dazu dient eine dem jeweiligen Pipettenkolben 7 zugeordnete, umlaufende Kolbendichtung 16.

Wesentlich ist nun, daß jeder Pipettenschaft 11 am oberen Ende eine umlaufende Dichtungsaufnahme 17 aufweist, in der die zuvor genannte, umlaufende Kolbendichtung 16 angeordnet ist. Fig. 2a zeigt dabei die Pipettenschäfte 11 gebrauchsfertig am Schaftträger 4 montiert und dazu in die Schaftaufnahmen 10 eingeschraubt. Man sieht, daß die Pipettenkolben 7 gerade in die Kolbendichtungen 16 am oberen Ende der Pipettenschäfte 11 eintauchen.

Fig. 2c zeigt die Anordnung von Fig. 2a jedoch mit abgenommenen, herausgeschraubten Pipettenschäften 11. Man erkennt, daß die umlaufende Kolbendichtung 16 jeweils bei Abnahme des Pipettenschafts 11 vom Schaftträger 4 in der Dichtungsaufnahme 17 im Pipettenschaft 11 verblieben ist. Das gilt jedenfalls in der dargestellten Anordnung, in der nämlich der jeweilige Pipettenkolben 7 sich in der obersten Position, der zurückgezogenen Stellung, befindet.

Man erkennt aus Fig. 2c den großen Vorteil der Erfindung, der darin liegt, daß alle Dichtungsbereiche unter Einschluß der Kolbendichtung 16 am Pipettenschaft 11 angeordnet bzw. ausgebildet sind, so daß man ein evtl. auftretenedes Dichtigkeitsproblem auf jeden Fall durch alleiniges Auswechseln des Pipettenschafts 11 beseitigen kann.

Man könnte nun für die Fixierung der Kolbendichtung 16 am Pipettenschaft 11 eine Methode anwenden, die im Stand der Technik bei Einkanal-Pipettiereinrichtungen bekannt und eingangs erläutert worden ist. Dazu könnte man die Kolbendichtung 16 mittels eines am Pipettenschaft 11 befestigten Fixierungselementes, insbesondere eines Federringes, eines Einschraubringes o. dgl., in der Dichtungsaufnahme 17 fixieren. Das würde besondere Maßnahmen an der Dichtungsaufnahme 17 des Pipettenschafts 11 zusätzlich erfordern, die überdies das Einsetzen der Kolbendichtung 16 in die Dichtungsaufnahme 17 erschweren könnten.

Nach bevorzugter Lehre der Erfindung ist daher vorgesehen und so auch in Fig. 2 gezeigt, daß in jeder Kolbenaufnahme 6 im Schaftträger 4 am Übergang zur Schaftaufnahme 10 ein Abstreifring 18 axial verschiebbar angeordnet und mittels eines Federelementes 19 nach unten in Richtung der Schaftaufnahme 10 vorgespannt ist und daß der Abstreifring 18 bei montiertem Pipettenschaft 11 die Kolbendichtung 16 in der Dichtungsaufnahme 17 fixiert. Ohne weiteres wäre es nun so, daß der Abstreifring 18 durch das Federelement 19 beim Abnehmen des Pipettenschafts 11 nach unten aus der Schaftaufnahme 10 herausgedrückt würde. Das ist machbar, aber nicht besonders zweckmäßig. Deswegen ist im dargestellten Ausführungsbeispiel und nach bevorzugter Lehre vorgesehen, daß in jeder Kolbenaufnahme 6 im Schaftträger 4 unten ein Anschlag 20 für den Abstreifring 18 angeordnet ist, gegen den der Abstreifring 18 mittels des Federelementes 19 vorgespannt ist. Mit der dargestellten Konstruktion kann man ohne weiteres realisieren, daß die Kolbendichtung 16 in der Dichtungsaufnahme 17 im Pipettenschaft 11 - nur - reibschlüssig gehalten ist. Das ist für die Bestückung des Pipettenschafts 11 mit der Kolbendichtung 16 außerordentlich zweckmäßig.

Man erkennt in Fig. 2a den Abstreifring 18 entgegen der Vorspannkraft des Federelementes 19 nach oben gedrückt. In Fig. 2b ist der jeweilige Pipettenschaft 11 schon nach unten weitgehend herausgeschraubt worden. Der Abstreifring 18 hat sich unter Wirkung der Federkraft des Federelementes 19 nach unten verschoben und liegt in Fig. 2b am Anschlag 20 an. Bei voll zurückgezogenem Pipettenkolben 7 taucht dieser nur noch so eben mit der Spitze in die Kolbendichtung 16 ein. Der Reibschluß der Kolbendichtung 16 in der Dichtungsaufnahme 17 im Pipettenschaft 11 reicht jetzt für sich aus, um die Kolbendichtung 16 im Pipettenschaft 11 zu halten. Man kann nun den Pipettenschaft 11 ohne weiteres vollständig herausschrauben, den Endzustand zeigt dann Fig. 2c. Der Abstreifring 18 hat sich beim Übergang von Fig. 2b nach Fig. 2c nicht mehr weiter verlagert, da er bereits am Anschlag 20 anliegt.

Für die Ausführung der Kolbendichtung 16 gibt es im Stand der Technik natürlich vielerlei Varianten. Besonders bewährt hat sich für die hohe Pipettiergenauigkeit, die in vielen Fällen gefordert wird, eine Ausführung der Mehrkanal-Pipettiereinrichtung dergestalt, daß die Kolbendichtung 16 als Dichthülse, insbesondere aus PTFE-Material oder einem anderen gleitfähigen Material ausgeführt und, vorzugsweise, mittels einer Elastomerdichtung 21, insbesondere eines O-Ringes, radial vorgespannt ist. Im dargestellten Ausführungsbeispiel sind für die aus PTFE bestehende Kolbendichtung 16 zwei Elastomerdichtungen 21 als Back-Up vorgesehen. Die die Kolbendichtung 16 bildende Dichthülse weist im übrigen eine umlaufende Anlagefläche für den Abstreifring 18 auf, so daß eine gleichmäßige, perfekte Kraftübertragung stattfindet.

Das Federelement 19 hat die weitere Funktion, die Kunststoffteile im Schaftträger 4 gegeneinander vorzuspannen und über den gesamten Temperaturbereich des Einsatzes der Pipettiereinrichtung vorgespannt zu halten. Das ist insbesondere beim Autoklavieren wichtig und wird natürlich primär durch ein metallisches Federelement 19 geleistet.

Das Federelement 19 spannt in Verbindung mit dem Abstreifring 18 durch axial gerichteten Druck auch die Elastomerdichtungen 21 radial nach außen zur Dichtungsaufnahme 17 hin. Dadurch sorgt das Federelement 19 für eine Abdichtung auch radial nach außen, so daß ein Luftzutritt in den Pipettenschaft 11 von außen her sicher verhindert wird.

Bereits oben ist darauf hingewiesen worden, daß das erfindungsgemäß vorgesehene herausnehmbare Einsetzen des Pipettenschafts 11 in die eingelassene Schaftaufnahme 10 im dargestellten Ausführungsbeispiel dadurch realisiert ist, daß der Pipettenschaft 11 in die Schaftaufnahme 10 eingeschraubt ist. Alternativen dazu gibt es in vielerlei Hinsicht, insbesondere kommt eine bajonettverschlußartige Befestigung ebenso in Frage.

Das dargestellte und insoweit bevorzugte Ausführungsbeispiel zeigt weiter eine besondere Ausführung der Pipettenschäfte 11 im Aufsteckabschnitt 13. Während im Stand der Technik, von dem die Erfindung ausgeht, zwischen der aufzusteckenden Pipettenspitze 14 und dem Pipettenschaft 11 im Aufsteckabschnitt 13 nur eine Flächendichtung realisiert ist, ist nach bevorzugter Lehre der Erfindung vorgesehen, daß jeder Pipettenschaft 11 im Aufsteckabschnitt 13 eine umlaufende Aufnahme 22 für eine Spitzendichtung 23 für die aufzusteckende Pipettenspitze 14 aufweist. Das erlaubt die Verwendung auch nicht optimal selbstdichtender Materialien für die Pipettenspitzen 14 bzw. größere Unebenheiten an der Innenseite der Pipettenspitzen 14. Das dargestellte Ausführungsbeispiel zeichnet sich weiter dadurch aus, daß die Spitzendichtung 23 als V-förmige Lippendichtung aus Elastomermaterial ausgeführt ist.

Insgesamt kommt für die Pipettenschäfte 11 der erfindungsgemäßen Mehrkanal-Pipettiereinrichtung Kunststoffmaterial als besonders zweckmäßig in Frage. Für besondere Anwendungen kommen auch andere Materialien, beispielsweise Glas in Frage. Für viele Anwendungen sollten die Materialien der Mehrkanal-Pipettiereinrichtung jedenfalls im Bereich der Pipettenkolben 7, Pipettenschäfte 11 und Pipettenspitzen 14 temperaturbeständig für die beim Sterilisieren, insbesondere bei einem Dampfsterilisieren auftretenden Temperaturen sein.

Gegenstand der Erfindung ist neben einer Mehrkanal-Pipettiereinrichtung auch ein Pipettenschaft für eine Pipettiereinrichtung mit den entsprechenden, bereits zuvor angesprochenen Merkmalen. Auf die entsprechenden weiteren Patentansprüche darf zur Vermeidung von Wiederholungen verwiesen werden.

## Patentansprüche

1. Mehrkanal-Pipettiereinrichtung
mit einem Gehäuse (1) mit einem quer angeordneten Schaftträger (4) und einem darüber quer angeordneten, gegenüber dem Schaftträger (4) bewegbaren Kolbenträger (5),
mit mehreren Kolbenaufnahmen (6) im Schaftträger (4) und einer entsprechenden Anzahl von am Kolbenträger (5) gelagerten, in die Kolbenaufnahmen (6) eintretenden Pipettenkolben (7),
mit einer entsprechenden Anzahl von im Schaftträger (4) auf der vom Kolbenträger (5) abgewandten Seite eingelassenen, die Kolbenaufnahmen (6) fortsetzenden Schaftaufnahmen (10) und
mit einer entsprechenden Anzahl von in den Schaftaufnahmen (10) herausnehmbar eingesetzten bzw. einsetzbaren Pipettenschäften (11),
wobei jeder Pipettenschaft (11) einen dem Pipettenkolben (7) angepaßten Zylinder (12) und am unteren Ende einen Aufsteckabschnitt (13) mit einem darin angeordneten Ausstoßkanal (15) aufweist,
wobei der Zylinder (12) am oberen Ende außen zur Befestigung in der Schaftaufnahme (10) ausgebildet ist,
wobei auf den Aufsteckabschnitt (13) eine Pipettenspitze (14) aufsteckbar ist und
wobei jedem Pipettenkolben (7) eine umlaufende Kolbendichtung (16) zugeordnet ist,
**dadurch gekennzeichnet,**
**daß** jeder Pipettenschaft (11) am oberen Ende innen eine umlaufende Dichtungsaufnahme (17) aufweist, in der die umlaufende Kolbendichtung (16) angeordnet ist und
**daß** die umlaufende Kolbendichtung (16) jedenfalls bei zurückgezogenem Pipettenkolben (7) bei Abnahme des Pipettenschaftes (11) vom Schaftträger (4) in der Dichtungsaufnahme (17) im Pipettenschaft (11) verbleibt.

2. Pipettiereinrichtung nach Anspruch 1, **dadurch gekennzeichnet, daß** die Kolbendichtung (16) mittels eines am Pipettenschaft (11) befestigten Fixierungselementes, insbesondere eines Federringes, eines Einschraubringes o. dgl., in der Dichtungsaufnahme (17) fixiert ist.

3. Pipettiereinrichtung nach Anspruch 1, **dadurch gekennzeichnet, daß** in jeder Kolbenaufnahme (6) im Schaftträger (4) am Übergang zur Schaftaufnahme (10) ein Abstreifring (18) axial verschiebbar angeordnet und mittels eines Federelementes (19) nach unten in Richtung der Schaftaufnahme (10) vorgespannt ist und daß der Abstreifring (18) bei montiertem Pipettenschaft (11) die Kolbendichtung (16) in der Dichtungsaufnahme (17) fixiert, wobei, vorzugsweise, in jeder Kolbenaufnahme (6) im Schaftträger (4) unten ein Anschlag (20) für den Abstreifring (18) angeordnet ist, in Richtung auf den der Abstreifring (18) mittels des Federelementes (19) vorgespannt ist, und/oder die Kolbendichtung (16) in der Dichtungsaufnahme (17) im Pipettenschaft (11) reibschlüssig gehalten ist.

4. Pipettiereinrichtung nach einem der Ansprüche 1 bis 3, **dadurch gekennzeichnet, daß** die Kolbendichtung (16) als Dichthülse, insbesondere aus PTFE-Material oder einem anderen gleitfähigen Material ausgeführt und, vorzugsweise, mittels einer Elastomerdichtung (21), insbesondere eines O-Ringes, radial vorgespannt ist.

5. Pipettiereinrichtung nach einem der Ansprüche 1 bis 4, **dadurch gekennzeichnet, daß** der Pipettenschaft (11) in die Schaftaufnahme (10) eingeschraubt ist oder daß der Pipettenschaft (11) in die Schaftaufnahme (10) bajonettverschlußartig eingesetzt ist und/oder daß der Pipettenschaft (11) aus Kunststoffinaterial besteht.

6. Pipettiereinrichtung nach einem der Ansprüche 1 bis 5, **dadurch gekennzeichnet, daß** jeder Pipettenschaft (11) im Aufsteckabschnitt (13) eine umlaufende Aufnahme (22) für eine Spitzendichtung (23) für die aufzusteckende Pipettenspitze (14) aufweist, wobei, vorzugsweise, die Spitzendichtung (23) als Elastomerdichtung ausgeführt ist, vorzugsweise als V-förmige Lippendichtung aus Elastomermaterial.

7. Pipettenschaft für eine Pipettiereinrichtung
mit einem einem vom Pipettenschaft (11) getrennten Pipettenkolben (7) angepaßten Zylinder (12) und am unteren Ende einem Aufsteckabschnitt (13) mit einem darin angeordneten Ausstoßkanal (15), wobei der Zylinder (12) am oberen Ende außen zur Befestigung in der Schaftaufnahme (10) ausgebildet ist und wobei auf den Aufsteckabschnitt (13) eine Pipettenspitze (14) aufsteckbar ist,
insbesondere für eine Mehrkanal-Pipettiereinrichtung nach einem der Ansprüche 1 bis 6,
wobei
am oberen Ende des Zylinders (12) innen eine umlaufende Dichtungsaufnahme (17) angeordnet ist, in der eine umlaufende Kolbendichtung (16) für den Pipettenkolben (7) angeordnet ist, und wobei die Kolbendichtung (16) mittels eines am Pipittenschaft (11) befestigte Fixierungselementes, insbesondere eines Federringes, eines Einschraubringes, in der Dichtungsaufnahme (17) fixiert ist oder die Kolbendichtung (16) in der Dichtungsaufnahme (17) im Pipettenschaft (11) reibschlüssig gehalten ist.

8. Pipettenschaft nach der Anspruch 7, **dadurch gekennzeichnet, daß** die Kolbendichtung (16) als Dichthülse, insbesondere aus PTFE-Material oder einem anderen gleitfähigen Material ausgeführt und, vorzugsweise, mittels einer Elastomerdichtung (21), insbesondere eines O-Ringes, radial vorgespannt ist.

9. Pipettenschaft nach Anspruch 7 bis 8, **dadurch gekennzeichnet, daß** der Pipettenschaft (11) am oberen Ende mit einem Außengewinde zum Einschrauben in eine Schaftaufnahme (10) versehen ist oder daß der Pipettenschaft (11) am oberen Ende mit einem Bajonettverschlußteil zum Verbinden mit einem Bajonettverschluß-Gegenteil an einer Schaftaufnahme (10) versehen ist und/oder daß der Pipettenschaft (11) aus Kunststoffmaterial besteht.

10. Pipettenschaft nach einem der Ansprüche 7 bis 9, **dadurch gekennzeichnet, daß** der Pipettenschaft (11) im Aufsteckabschnitt (13) eine umlaufende Aufnahme (22) für eine Spitzendichtung (23) für die aufzusteckende Pipettenspitze (14) aufweist, wobei, vorzugsweise, die Spitzendichtung (23) als Elastomerdichtung ausgeführt ist, insbesondere als V-förmige Lippendichtung aus Elastomermaterial.

## Claims

1. Multi-duct pipetting device,
with a housing (1) with a transversely arranged stem carrier (4) and with a piston carrier (5) arranged transversely above the latter and movable with respect to the stem carrier (4),
with a plurality of piston receptacles (6) in the stem carrier (4) and with a corresponding number of pipette pistons (7) mounted on the piston carrier (5) and penetrating into the piston receptacles (6),
with a corresponding number of stem receptacles (10) which are introduced in the stem carrier (4) on the side facing away from the piston carrier (5) and which continue the piston receptacles (6), and
with a corresponding number of pipette stems (11) inserted or insertable removably in the stem receptacles (10),
each pipette stem (11) having a cylinder (12) adapted to the pipette piston (7) and, at the lower end, a plug-on portion (13) with an ejection duct (15) arranged therein,
the cylinder (12) being designed at the upper end, on the outside, for fastening in the stem receptacle (10), a pipette tip (14) being capable of being plugged onto the plug-on portion (13), and
each pipette piston (7) being assigned a peripheral piston seal (16),
**characterized**
**in that** each pipette stem (11) has at the upper end, on the inside, a peripheral seal receptacle (17) in which the peripheral piston seal (16) is arranged, and
**in that** the peripheral piston seal (16) in any event remains in the seal receptacle (17) in the pipette stem (11) when a pipette piston (7) is retracted and the pipette stem (11) is removed from the stem carrier (4).

2. Pipetting device according to Claim 1, **characterized in that** the piston seal (16) is fixed in the seal receptacle (17) by means of a fixing element, in particular a spring ring, screw-in ring or the like, fastened to the pipette stem (11).

3. Pipetting device according to Claim 1, **characterized in that** a stripping ring (18) is arranged axially displaceably in each piston receptacle (6) in the stem carrier (4) at the transition to the stem receptacle (10) and is prestressed downwards in the direction of the stem receptacle (10) by means of a spring element (19), and **in that**, with the pipette stem (11) fitted, the stripping ring (18) fixes the piston seal (16) in the seal receptacle (17), and, preferably, each piston receptacle (6) in the stem carrier (4) has arranged in it at the bottom, for the stripping ring (18), a stop (20) in the direction of which the stripping ring (18) is prestressed by means of the spring element (19), and/or the piston seal (16) being held frictionally in the seal receptacle (17) in the pipette stem (11).

4. Pipetting device according to one of Claims 1 to 3, **characterized in that** the piston seal (16) is produced as a sealing sleeve, in particular from PTFE material or another slideable material, and, preferably, is prestressed radially by means of an elastomeric seal (21), in particular an 0-ring.

5. Pipetting device according to one of Claims 1 to 4, **characterized in that** the pipette stem (11) is screwed into the stem receptacle (10), or **in that** the pipette stem (11) is inserted into the stem receptacle (10) in the manner of a bayonet fastening, and/or **in that** the pipette stem (11) consists of plastic material.

6. Pipetting device according to one of Claims 1 to 5, **characterized in that** each pipette stem (11) has, in the plug-on portion (13), a peripheral receptacle (22) for a tip seal (23) for the pipette tip (14) to be plugged on, preferably the tip seal (23) being produced as an elastomeric seal, preferably as V-shaped lip seal made from elastomeric material.

7. Pipette stem for a pipetting device,
with a cylinder (12) adapted to a pipette piston (7) separate from the pipette stem (11) and, at the lower end, with a plug-on portion (13) having an ejection duct (15) arranged therein, the cylinder (12) being designed at the upper end, on the outside, for fastening in the stem receptacle (10), and a pipette tip (14) being capable of being plugged onto the plug-on portion (13),
in particular for a multi-duct pipetting device according to one of Claims 1 to 6,
there being arranged at the upper end of the cylinder (12), on the inside, a peripheral seal receptacle (17) in which a peripheral piston seal (16) for the pipette piston (7) is arranged, and the piston seal (16) being fixed in the seal receptacle (17) by means of a fixing element, in particular a spring ring or a screw-in ring, fastened to the pipette stem (11), or the piston seal (16) being held frictionally in the seal receptacle (17) in the pipette stem (11).

8. Pipette stem according to Claim 7, **characterized in that** the piston seal (16) is produced as a sealing sleeve, in particular from PTFE material or another slideable material, and, preferably, is prestressed radially by means of an elastomeric seal (21), in particular an O-ring.

9. Pipette stem according to Claims 7 and 8, **characterized in that** the pipette stem (11) is provided at the upper end with an external thread for screwing into a stem receptacle (10), or **in that** the pipette stem (11) is provided at the upper end with a bayonet fastening part for connection to a bayonet fastening counterpart on a stem receptacle (10), and/or **in that** the pipette stem (11) consists of plastic material.

10. Pipette stem according to one of Claims 7 to 9, **characterized in that** the pipette stem (11) has, in the plug-on portion (13), a peripheral receptacle (22) for a tip seal (23) for the pipette tip (14) to be plugged on, preferably the tip seal (23) being produced as an elastomeric seal, in particular as a V-shaped lip seal made from elastomeric material.

## Revendications

1. Dispositif de pipetage à canaux multiples
avec un boîtier (1) avec un support de tige (4) disposé transversalement et un support de piston (5) disposé transversalement par-dessus, déplaçable par rapport au support de tige (4),
avec plusieurs logements de piston (6) dans le support de tige (4) et un nombre correspondant de pistons de pipette (7) montés sur le support de piston (5), pénétrant dans les logements de piston (6),
avec un nombre correspondant de logements de tige (10) pratiqués dans le support de tige (4) du côté opposé au support de piston (5), qui suivent les logements de piston (6) et
avec un nombre correspondant de tiges de pipette (11) insérées ou insérables de manière rétractable dans les logements de tige (10),
chaque tige de pipette (11) présentant un cylindre (12) adapté au piston de pipette (7) et à l'extrémité inférieure une portion d'enfichage (13) avec un canal d'éjection (15) disposé dedans, le cylindre (12) étant réalisé à l'extrémité supérieure à l'extérieur en vue de sa fixation dans le logement de tige (10),
une pointe de pipette (14) pouvant être enfichée sur la portion d'enfichage (13) et
un joint d'étanchéité de piston périphérique (16) étant associé à chaque piston de pipette (7),
**caractérisé en ce que**
chaque tige de pipette (11) présente à l'extrémité supérieure à l'intérieur un logement de joint d'étanchéité périphérique (17) dans lequel est disposé le joint d'étanchéité de piston périphérique (16) et
**en ce que** le joint d'étanchéité de piston périphérique (16) reste toujours dans le logement de joint d'étanchéité périphérique (17) dans la tige de pipette (11) lorsque le piston de pipette (7) est rétracté lors de l'enlèvement de la tige de pipette (11) du support de tige (4).

2. Dispositif de pipetage selon la revendication 1, **caractérisé en ce que** le joint d'étanchéité de piston (16) est fixé au moyen d'un élément de fixation fixé sur la tige de pipette (11), notamment d'une rondelle élastique, d'une rondelle filetée ou similaire, dans le logement de joint d'étanchéité (17).

3. Dispositif de pipetage selon la revendication 1, **caractérisé en ce que** dans chaque logement de piston (6) dans le support de tige (4) est disposé, au niveau du passage au logement de tige (10), une bague de grattage (18) déplaçable axialement qui est précontrainte au moyen d'un élément de ressort (19) vers le bas dans la direction du logement de tige (10) et **en ce que** la bague de grattage (18) lorsque la tige de pipette (11) est montée, fixe le joint d'étanchéité de piston (16) dans le logement de joint d'étanchéité (17), une butée (20) pour la bague de grattage (18) étant de préférence disposée en bas dans chaque logement de piston (6) dans le support de tige (4), dans la direction de laquelle la bague de grattage (18) est précontrainte au moyen de l'élément de ressort (19), et/ou le joint d'étanchéité de piston (16) est maintenu par engagement par frottement dans le logement de joint d'étanchéité (17) dans la tige de pipette (11).

4. Dispositif de pipetage selon l'une quelconque des revendications 1 à 3, **caractérisé en ce que** le joint d'étanchéité de piston (16) est réalisé sous forme de gaine d'étanchéité, notamment en matériau en PTFE ou en un autre matériau glissant, et de préférence, est précontraint radialement au moyen d'un joint d'étanchéité élastomère (21), notamment un joint torique.

5. Dispositif de pipetage selon l'une quelconque des revendications 1 à 4, **caractérisé en ce que** la tige de pipette (11) est vissée dans le logement de tige (10) ou **en ce que** la tige de pipette (11) est insérée par engagement de type fermeture à baïonnette dans le logement de tige (10) et/ou **en ce que** la tige de pipette (11) se compose de matière plastique.

6. Dispositif de pipetage selon l'une quelconque des revendications 1 à 5, **caractérisé en ce que** chaque tige de pipette (11) présente dans la portion d'enfichage (13) un logement périphérique (22) pour un joint d'étanchéité de pointe (23) pour la pointe de pipette (14) à enficher, le joint d'étanchéité de pointe (23) étant de préférence réalisé en tant que joint d'étanchéité élastomère, de préférence sous forme de joint d'étanchéité à lèvre en forme de V en matériau élastomère.

7. Tige de pipette pour un dispositif de pipetage
avec un cylindre (12) adapté à un piston de pipette (7) séparé de la tige de pipette (11) et à l'extrémité inférieure une portion d'enfichage (13) avec un canal d'éjection (15) disposé dedans, le cylindre (12) étant réalisé à l'extrémité supérieure à l'extérieur en vue de sa fixation dans le logement de tige (10) et une pointe de pipette (14) pouvant être enfichée sur la portion d'enfichage (13),
notamment pour un dispositif de pipetage à canaux multiples selon l'une quelconque des revendications 1 à 6,
dans laquelle
à l'extrémité supérieure du cylindre (12) à l'intérieur, est disposé un logement de joint d'étanchéité périphérique (17), dans lequel est disposé un joint d'étanchéité de piston périphérique (16) pour le piston de pipette (7), et dans laquelle le joint d'étanchéité de piston (16) est fixé dans le logement de joint d'étanchéité (17) au moyen d'un élément de fixation fixé à la tige de pipette (11), notamment d'une rondelle élastique, d'une rondelle filetée, ou le joint d'étanchéité de piston (16) est maintenu par engagement par frottement dans le logement de joint d'étanchéité (17) dans la tige de pipette (11).

8. Tige de pipette selon la revendication 7, **caractérisée en ce que** le joint d'étanchéité de piston (16) est réalisé sous forme de gaine d'étanchéité, notamment en matériau en PTFE ou en un autre matériau glissant, et de préférence, est précontraint radialement au moyen d'un joint d'étanchéité élastomère (21), notamment un joint torique.

9. Tige de pipette selon la revendication 7 ou 8, **caractérisée en ce que** la tige de pipette (11) est pourvue à l'extrémité supérieure d'un filetage extérieur pour son vissage dans un logement de tige (10) ou **en ce que** la tige de pipette (11) est pourvue à l'extrémité supérieure d'une partie d'engagement de type fermeture à baïonnette pour la connexion à une partie conjuguée de fermeture à baïonnette sur un logement de tige (10) et/ou **en ce que** la tige de pipette (11) se compose de matière plastique.

10. Tige de pipette selon l'une quelconque des revendications 7 à 9, **caractérisée en ce que** la tige de pipette (11) présente dans la portion d'enfichage (13) un logement périphérique (22) pour un joint d'étanchéité de pointe (23) pour la pointe de pipette (14) à enficher, le joint d'étanchéité de pointe (23) étant de préférence réalisé en tant que joint d'étanchéité élastomère, de préférence sous forme de joint d'étanchéité à lèvre en forme de V en matériau élastomère.
